# EUROPEAN PATENT APPLICATION

(11) **EP 2 237 171 A1**
(43) Date of publication of application: **06.10.2010**
(21) Application number: 10003601.1
(22) Date of filing: 31.03.2010
(51) Int. Cl.: G06F 17/30

(54) **Systems and methods for processing data objects**

(30) Priority: 31.03.2009 US 414857; 31.03.2009 US 414901
(71) Applicant: SAP AG, 69190 Walldorf (DE)
(72) Inventor: Dentzer, Ralf, 69190 Walldorf (DE)
(74) Representative: Müller-Boré & Partner Patentanwälte

(57) **Abstract**

A system and method for processing data objects is provided. The system and method may comprise a user interface module, a fast data provider module, and a transaction provider module, which modules are configured to exchange data and which may be distributed over a plurality of interconnected servers. Data objects may be statelessly read from a database by the fast data provider module and, after an amendment of the data via the user interface module, statefully saved by the transaction provider module.

## Description

### TECHNICAL FIELD

The technical field of the present invention is in the area of electronic data processing. More particularly, the invention relates to methods, computer programs, products and systems including architecture and user interfaces for large scale business applications, such as an enterprise resource planning (ERP) application.

### BACKGROUND

Computer systems in modern business application environments offer sophisticated user interfaces providing vast amounts of information to users to support improving decision making. To provide this functionality and permit users to easily correct, update, complete or add the information displayed in these interfaces, current approaches provide the information through data obtained, from a transactional context, in a "backend." Often the backend of a business application consists of several layers that offer generic functionality. All of these layers have to keep the state and buffering in case of transactional access. This approach has a major impact on the overall performance of the applications: in the backend, state and transactional buffering of all the information has to be preserved which consumes system resources: memory, processing time, communication steps.

Moreover, several recent trends impact classical business computing application architectures. For example, rich user interfaces require provision of comprehensive refined business information at PC response times while large enterprises are integrating and streamlining separate business systems into one comprehensive instance to consolidate information and reduce computing costs. At the same time, application service providers want to offer these business systems through hosted, on demand business solutions to a maximum number of users while minimizing the need for computing systems to keep operating costs low. However, the increasing amounts of information needed to fulfill business and compliance requirements necessitates high performance computer systems. Further, the integration of different application areas, such as financial, sales, purchasing, production, projects or human resources, into consolidated computing systems increases complexity.

Accordingly, there is a need in the art to efficiently process data to keep operating costs low.

### BRIEF DESCRIPTION OF THE DRAWINGS

The accompanying drawings, which are incorporated in and constitute a part of this specification, illustrate embodiments of the invention and, together with the description, explain the principles of the invention. In the drawings,
Fig. 1 is a block diagram for illustrating a first implementation of an exemplary computer system consistent with an embodiment of the invention;
Fig. 2a is a block diagram for illustrating a second implementation of an exemplary computer system consistent with an embodiment of the invention;
Fig. 2b is a block diagram for illustrating a third implementation of an exemplary computer system consistent with an embodiment of the invention;
Figs. 3a and 3b show a flow diagram for illustrating a first process consistent with an embodiment of the invention.
Figs. 4a and 4b show a flow diagram for illustrating a second process consistent with an embodiment of the invention.
Fig. 5 is a block diagram for illustrating a fourth implementation of an exemplary computer system consistent with an embodiment of the invention;
Fig. 6 is a block diagram for illustrating a fifth implementation of an exemplary computer system consistent with an embodiment of the invention;
Fig. 7 is a block diagram for illustrating a sixth implementation of an exemplary computer system consistent with an embodiment of the invention;
Fig. 8 is a flow diagram for illustrating a process consistent with an embodiment of the invention.

### DETAILED DESCRIPTION OF THE EMBODIMENTS

In view of the foregoing, it is a primary object of the present invention to provide methods, computer programs, products and systems including architecture and user interface for large scale business applications, such as an enterprise resource planning (ERP) application.

The architecture comprises a user interface module, a fast data provider module and a transaction provider module, which modules are configured to exchange data and which may be distributed over a plurality of interconnected servers. Data objects may be statelessly read from a database by the fast data provider module and, after an amendment of the data via the user interface module, statefully saved by the transaction provider module.

In accordance with the principles of the invention, as embodied and broadly described herein, an aspect of the invention provides a computer system for processing a data object comprising: a storage device containing a database for storing a plurality of data objects; a user interface module configured to create a document to be presented to a user via a graphical user interface on a screen; a fast data provider module configured to statelessly read upon request from the user interface module the data object from the database by treating the request as an independent transaction and provide the data object to the user interface module; a transaction provider module configured to read the data object from the user interface module, to transactionally read or store the data object from or in the database by preserving consistency and atomicity, and to perform a consistency check between the data object read from the user interface module and the database; wherein the user interface module is further configured to: read the data object from the fast data provider module or from the transaction provider module, incorporate data of said data object into the document, receive via the graphical user interface a user interaction indicating that data of a data object has been entered or amended, and, on response of said indication, send a request the transaction provider to transactionally read said data object from the database; merge the entered or amended data with the read data object; and pass the data object including the entered or amended data to the transaction provider module to transactionally store the entered or amended data in the database.

The database may be a relational database. Furthermore, the fast data provider module may comprise at least one of a caching and a replication mechanism. Also, the user interaction may comprise initiating a save function in the graphical user interface.

In some cases, the user interaction may comprise activating a data field via the graphical user interface. In addition, the user interaction may comprise moving a cursor in a data field in the graphical user interface. It is also possible that the user interface module, the fast data provider module and the transaction provider module are distributed over a plurality of interconnected servers.

In accordance with the principles of the invention, as embodied and broadly described herein, another aspect of the invention provides a computerized method for updating a data object in a database, comprising: receiving, via a graphical user interface and a user interface module, a request to display data from the data object; sending, via the user interface module, a request for said data object to a fast data provider module; statelessly reading, by means of the fast data provider module, the data object from the database by treating the request as an independent transaction; sending the read data object to the user interface module; displaying data from said data object via the graphical user interface; receiving, via the graphical user interface, a user interaction indicating that data relating to the displayed data has been entered or amended; and, responsive to said received user interaction: requesting, via the user interface module, the transaction provider to transactionally read said data object from the database by preserving consistency and atomicity of said data object; merging said data object with the entered or amended data; transactionally updating, via the transaction provider module, the data object in the database by preserving consistency and atomicity.

In some cases, the method further comprises performing a consistency check between the amended data object and the transactionally read data object and, when the consistency checks reveal no error, updating the data object in the database on the basis of the amended data object. Also, the user interaction may comprise initiating a save functionality in the graphical user interface. Moreover, the user interaction may comprise activating a data field via the graphical user interface. Furthermore, the user interaction may comprise moving a cursor in a data field in the graphical user interface.

In accordance with the principles of the invention, as embodied and broadly described herein, further aspects of the invention may provide a computer system for processing data objects in a large scale enterprise environment. The system may comprise a first database for storing the data objects and a second database for storing transaction documents. For displaying or changing operations, the system may comprise a user interface module configured for processing the data objects stored in the database. The system may further comprise a fast data provider module designed and configured to provide upon request from the user interface module data objects from the database to the user interface module. The system may also comprise a user transaction provider module (UTP) designed or configured to read amended data objects from the user interface module, read data objects from the fast data provider module, perform consistency checks between the data objects read from the user interface module and the fast data provider module and store changes of the data objects made via the user interface module in a user transaction document. The system further comprises a business transaction provider module configured to read amended data objects from the transaction documents and data objects from the first database. It is further configured to perform consistency checks between the read data objects and to perform updates of the data objects in the first database based on the user transaction documents in the second database.

In accordance with the principles of the invention, as embodied and broadly described herein, yet another aspect of the invention may provide a computer system for processing a data object. The system may comprise a data object database for storing the data object and a transaction document database for storing a transaction document. The system may also comprise a user interface module configured for processing the data object stored in the database. The system may further comprise a fast data provider module designed and configured to provide upon request from the user interface module the data object from the database to the user interface module. The system may also comprise a user transaction provider module (UTP) designed or configured to read a possibly amended data object from the user interface module, read the data object from the fast data provider module, perform a consistency check between the data object read from the user interface module and the fast data provider module and store changes of the data object made via the user interface module in a user transaction document. The system further comprises a business transaction provider module configured to read the user transaction document and the data object from the data object database. The system may be configured to perform a consistency check between the read data objects, and to perform an update of the data object in the data object database based on the read transaction document in the transaction document database.

In an embodiment of the invention, data objects are stored in a relational database system. In a further embodiment, said storing may be performed transactionally.

The fast data provider module may include at least one of a caching and a replication mechanism. Also, the fast data provider module may be implemented on a first server in a network and includes a buffer comprising copies of the data objects from the data object database. It is also possible that the user interface provider module, user transaction provider module, and business transaction provider module are implemented on a second server.

In some cases, a plurality of fast data provider modules are implemented on a plurality of servers.

In accordance with the principles of the invention, as embodied and broadly described herein, a further aspect of the invention may provide a computerized method for processing a data object. The method may comprise sending via a user interface module a request for the data object to a fast data provider module. The method may further comprise based on said request, reading, by means of the fast data provider module the data object from a data object database. Moreover, the method may include sending the read data object to the user interface module. The method may also comprise amending said read data object via the user interface module. Furthermore, the method may comprise storing via the user transaction module the amended data in a transaction document in a transaction document database. It is possible that the method further comprises reading via the user transaction module the data object from the transaction document and from the fast data provider module and performing a consistency check between said data objects. The method may also comprise requesting via the user transaction module a business transaction module to process the transaction document. In addition, the method may comprise performing via the business transaction module a consistency check between the data object of the transaction document and the corresponding data object in the data object database; and when the data is consistent, updating the data object in the data object database on the basis of the transaction document.

In some cases, updating the data object in the data object database is performed transactionally.

In accordance with the principles of the invention, as embodied and broadly described herein, a further aspect of the invention may provide an article of manufacture comprising a computer usable medium having a computer readable instruction embodied therein, said computer readable instruction adapted to be executed to implement a method for processing data objects. The method may comprise sending via a user interface module a request for a data object to a fast data provider module. Also, the method may further comprise responsive to said request, reading by means of the fast data provider module the request data object from a data object database. Moreover, the method may include sending the read data object to the user interface module. The method may also comprise amending said read data object via the user interface module. The method may also include storing via a user transaction module the amended data in a transaction document in a user transaction database. Furthermore, the method may include reading via the user transaction module data from the transaction document and the fast data provider module. In addition, the method may also include performing a consistency check between said data objects read via the user transaction module. The method may further include requesting via the user transaction module a business transaction module to process the transaction document. Moreover, the method may include performing via the business transaction module a consistency check between the data object of the transaction document and the corresponding data object in the data object database; and when the data is consistent, transactionally updating the data object in the data object database based on the transaction document.

In some cases, updating the data objects in the data object database is performed transactionally.

The modules consistent with the invention may be installed as one or more programs or program modules on different hardware systems (computers or computer systems), and run separately and independently of each other, while in their entirety being capable of performing business transactions in a large enterprise environment or in a "software on demand" environment.

The proposed system and process is supposed to need, compared to current business applications, much less updating operations, which impact many different parts of the business application system and many individual data records or data objects. In other words, some of the proposed systems and processes described herein may require, compared to current business applications and systems, less updating operations, which improves response times and performance.

The proposed system and process may minimize the amount of data offered transactionally. The standard way to access data is preferably stateless. The system automatically switches to transactional data provision as soon as the user indicates an updating operation on the graphical user interface.

Additional objects and advantages of the various embodiments of the invention will be set forth in part in the description, or may be learned by practice of the invention. The objects and advantages of the embodiments of the invention will be realized and attained by means of the elements and combinations particularly pointed out in the claims. Embodiments of the invention are disclosed herein and set forth in the claims. The various embodiments can include and/or exclude different aspects, features and/or advantages, where applicable. Excluded or included features may depend on the functionality of a particular system. In addition, various embodiments can combine one or more aspects or features of other embodiments, where applicable.

It is to be understood that both the foregoing general description and the following detailed description are exemplary and explanatory only and are not restrictive of the embodiments of the invention, as claimed. The description of aspects, features and/or advantages of particular embodiments should not be construed as limiting other embodiments or the claims.

Within the concept of this disclosure, the terms used shall have their usual meaning in the context of the field of data processing unless defined otherwise. Particularly, a computer system broadly refers to any stand alone computer such as a PC or a laptop or a series of computers connected via a network, e.g. a network within a company, or a series of computers connected via the internet. Computer systems and programs may be closely related. As used herein, phrases, such as "the computer provides" and "the program provides or performs specific actions", "a user performs a specific action" are used to express actions by a computer system that may be controlled by a program or to express that the program or program module may be designed to enable the computer system to perform the specific action or to enable a user to perform the specific action by means of a computer system.

The term "user interface provider module" (UIP) broadly refers to a set of instructions which enable presenting a graphical user interface (GUI) on a screen to a user for displaying and changing data associated with a data object in data fields. In an embodiment, the user interface provider module is capable of displaying any data that it reads from the fast data provider module. It is also designed to allow updating operations by means of a user transaction document via the user transaction provider module.

The term "user transaction document" (UTD) broadly refers to a document in which data relating to a business object that is, for example, entered by the user via the graphical user interface, is stored for further processing by a business transaction provider module. Such data may be stored as a complete and amended business object. Alternatively, only amended data may be stored together with a reference, such as an ID or link, to the business object in the database. The user transaction document may also serve as a voucher for an amendment. Further implementations may be readily available to one of ordinary skill.

The term "data object" broadly refers to any data in a database, which is identified by a key. A data object may be implemented by one or more lines of one or more tables. Data objects are for example used to represent real world entities. In ERP applications they are used to represent business entities such as company, employee, bank account, purchase order, address and the like. They may be stored by means of commercially available database systems. Different data objects may have data of different data types. A certain data type may be uniquely identified by a DataID. So, each piece of data may be characterized by a pair DataType-DataID. Example: the address of a company may have the DataType Address, a DataID 123165424, and the actual content "name - street number - Street - city - zip code - state - country". As can be seen in this example, data types may be structured. A data object may also be composed of other data objects, each having one or more data types. '

Further, within the concept of this disclosure, the term "process" shall be interpreted broadly. This means that the term is intended to refer not only to a plurality of actions or commands of program modules or the like, but also to a single action or command.

The term "user interface module" (UI) broadly refers to a set of instructions which allow the creation of a document, which may comprise data of a data object and which may be presented via a graphical user interface (GUI) on a screen to a user. The GUI allows displaying, amending and changing data in data fields. The document may be implemented e.g. by a HTML or XML document, the GUI may be e.g. a conventional browser. In other words: the UI communicates with the GUI.

In an embodiment, the user interface module is capable of creating documents or files, which comprise any data including data objects that it reads from the fast data provider (FDP) module and which documents may be displayed to a user via a graphical user interface. It may also be designed to allow updating operations via the transaction provider module (TP). The user interface module may also connect fields on a screen in the graphical user interface to the data obtained from a data object. The user interface moduleknows which field relates to which DataType/DataID and may also keep sufficient state information to react to user interactions with the field on the screen, such as through buttons, cursors, mouse pointers, checkboxes, changed field values, and other interactions known to those of ordinary skill in the art.

In an embodiment, the user interface module may request data from the fast data provider module, the transaction provider module, or both. The user interface module may also be equipped with logic to switch between the fast data provider module and the transaction provider module. In an embodiment, the user interface module may include logic to perform consistency checks on data that is entered or amended by, for example, comparing the amended data to other stored data.

The term "fast data provider module" (FDP) broadly refers to a set of instructions and memory, which allows fast reading of a single data object or multiple data objects. Thus, the FDP may be capable of fast read access to data objects stored in the first database, by techniques such as caching, indexing, and/or replication mechanisms. It may also be capable of handling large volumes of data objects as a basis to implement user-friendly operations like searching, extracting, aggregating, or summarizing data.

In some embodiments, the fast data provider module may be implemented as a fast search engine such as T-REX® from SAP AG in Walldorf, Germany, which may be a standard source for business data search. The fast data provider may indirectly retrieve from the data base and may be optimized for speed by using caches, pre-calculations, main memory buffers, databases held in main memory, and/or redundant data storage on a plurality of servers. In some embodiments, the fast data provider operates stateless.

The term "transaction provider module" (TP) broadly refers to a set of instructions, which allow transactionally reading and writing data objects in the database. The TP may be designed and configure to perform consistency checks based on business rules and reject changes in case of inconsistencies. In the context of a single data object, the term "transactional" means that a data object is only stored or updated in the data base when it is atomic, consistent and independent. In some embodiments, a data object is stored in its entirety, or if this is not possible, because, for example, one or more tables associated with the data object are locked, the data object is not stored at all. In particular embodiments, a data object may only be stored or updated in the database when it is atomic, consistent, and independent. In the context of multiple, related data objects, the term "transactional" means that a data object and related data objects are only stored or updated in the database in their entirety, or if this is not possible, e.g. because one of the plurality of its tables is locked, not at all. In some embodiments the transactional functionality may be implemented by setting locks on data objects, such as when they are read. A transactional storing process is also commonly referred to as logical unit of work.

The term "business transaction provider module" (BTP) broadly refers to a set of instructions which allow processing of user transaction documents including transactionally persisting the amended data objects in the database. The BTP may be implemented to handle data updating operations, create a user transaction document for an updating operation, perform business validations using data from the fast data provider, facilitate changes and corrections to a transient user transaction document, persist the user transaction document, and/or initiate processing of the user transaction document by the business transaction provider.

The business transaction provider module may be further configured to perform business validations for a user transaction document based on the latest data objects, perform transactional changes of data objects specified by a user transaction document, reject a user transaction document if there are inconsistencies, persist updated data objects, and/or designate a user transaction document as processed, rejected, or in error. The business transaction provider module may be further configured to administer data objects and/or manage overall consistency.

In some installations, the business transaction provider module may be a bottleneck and user interface provider module and fast data provider module may work with copies of the data objects and provide capabilities for interacting with the user. In other embodiments, the business transaction provider module, user interface provider module and fast data provider module may be distributed over a plurality of computers/servers, thereby enabling a scaling of the system.

The described modules and other embodiments of the invention may be implemented by means of a computer system and software which allows the creation of business software applications and which allows the use of databases or database applications and Internet applications.

In an embodiment of the invention, data objects are stored in a relational database system. In a further embodiment, said storing is performed transactionally.

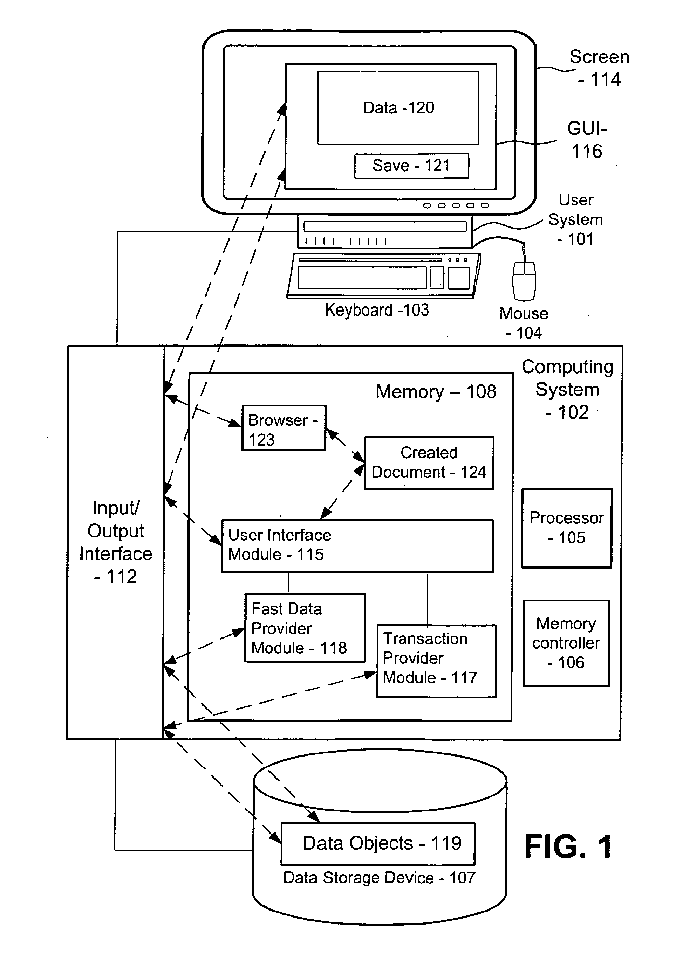

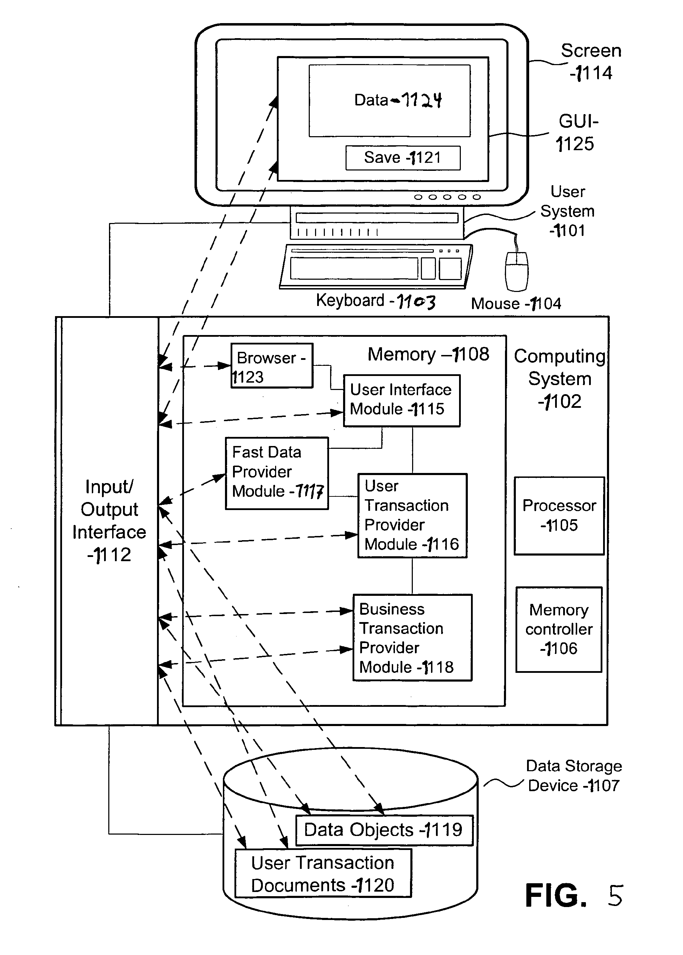

Reference will now be made in detail to principles and exemplary embodiments of the invention by an explanation on the basis of a data processing process, examples of which are illustrated in the accompanying drawings. Figures 1 to 4b may be understood to relate to one aspect and figures 5 to 8 may be understood to relate to another aspect. Features or examples corresponding to each aspect may overlap or be combined.

Referring now to FIG. 1, an exemplary system is illustrated that contains a user system 101 attached to a screen 114, keyboard 103, and mouse 104; a computing system 102; and, data storage 107. Those skilled in the art will appreciate that some methods, systems and programs consistent with the present invention may apply equally to any computer system, regardless of whether the computer system is a complicated multi-user computing apparatus or a single user device such as a personal computer or workstation. In the embodiment of FIG. 1, computing system 102 contains a processor 105, memory 108, a memory controller 106, and an input/output interface 112, all of which are interconnected via a system bus. The computing system 102 and user system 101 may include various modifications or additions not shown, such as adding cache memory or other peripheral devices. Input/Output interface 112 may contain several interfaces, including an auxiliary storage interface for connectivity to data storage 107, a general input/output interface for connectivity to a network and computers such user system 101, and a terminal interface.

Processor 105 may perform computation and control functions of computing system 102, and comprises a suitable central processing unit (CPU). Processor 105 may comprise a single integrated circuit, such as a microprocessor, or may comprise any suitable number of integrated circuit devices and/or circuit boards working in cooperation to accomplish the functions of a processor. Processor 105 may execute computer programs, such as object-oriented computer programs, within memory 108.

Input/Output interface 112 may contain an interface allowing computing system 102 to store and retrieve information from auxiliary storage devices, such as a magnetic disk (e.g., hard disks or floppy diskettes) or optical storage devices (e.g., CD-ROM). One suitable storage device is a direct access data storage device (DASD) 107. As shown in FIG. 1, data storage device 107 may comprise a hard disk drive which may read programs and data from a hard disk.

Memory controller 106, through a processor, is responsible for moving requested information from memory 108 and/or through input/output interface 112 to processor 105. While memory controller 106 is shown as a separate entity, those of ordinary skill in the art will understand that, in practice, portions of the function provided by memory controller 106 may actually reside in the circuitry associated with processor 105, memory 108, and/or input/output interface 112.

A terminal interface may be included as part of input/output interface 112 to allow system administrators, computer programmers or other end users to communicate with computing system 102, through, for example, screen 114, keyboard 103, mouse 104, and the like or through programmable workstations.

Input/output interface 112 allows computing system 102 via processor 105 to communicate with a network to establish a network connection with user system 101 for sending and/or receiving data. In one embodiment, a plurality of computing systems like computing system 102 can be connected to the same network via each systems input/output interface 112. In such a case, the network computers can be used to increase the computing and processing capabilities of the entire system.

In an embodiment, memory 108 includes an operating system and an application, such as an enterprise resource planning, which application may include module 115 for creating a document 124. Another generic application, such as browser 123, may also be in memory to provide generic functionality for creating a graphical user interface 116 to be displayed on screen 114. The created document 124 may be presented by a browser 123 as a graphical user interface 116 on screen 114. Both the browser 123 and user interface module. Memory 108 may further include transaction provider module 117 and fast data provider module 118, which may have access to data objects 119, as indicated by the broken arrows. Data objects 119 may be stored on data storage 107, via commercially available database systems.

UI 115 User interface module 115 may be configured to exchange messages and data with transaction provider module 117 and fast data provider module 118, as indicated by the solid lines between the modules. User interface module 115 may be further configured to present a GUI 116 including a data field 120, and a save button 121 in the GUI 116 on screen 114, and to receive interactions via input means including keyboard 103 and mouse 104, such as by clicking on save button 121.

It should be understood that memory 108 may comprise "memory" in its broadest sense, and may include, for example, Dynamic Random Access Memory (DRAM), Static RAM (SRAM), flash memory, cache memory, and other forms of known memory. While not explicitly shown in FIG. 1, memory 108 may be a single type of memory component or may be composed of many different types of memory components. For example, memory 108 and processor 105 may be distributed across several different computers that collectively comprise computing system 102. Further, it should also be understood that programs in memory 108 may include any form of computer program, including source code, intermediate code, machine code, and any other representation of a computer program. It should further be understood that data objects 119 may also be stored or buffered in memory like memory 108 as pointed out above.

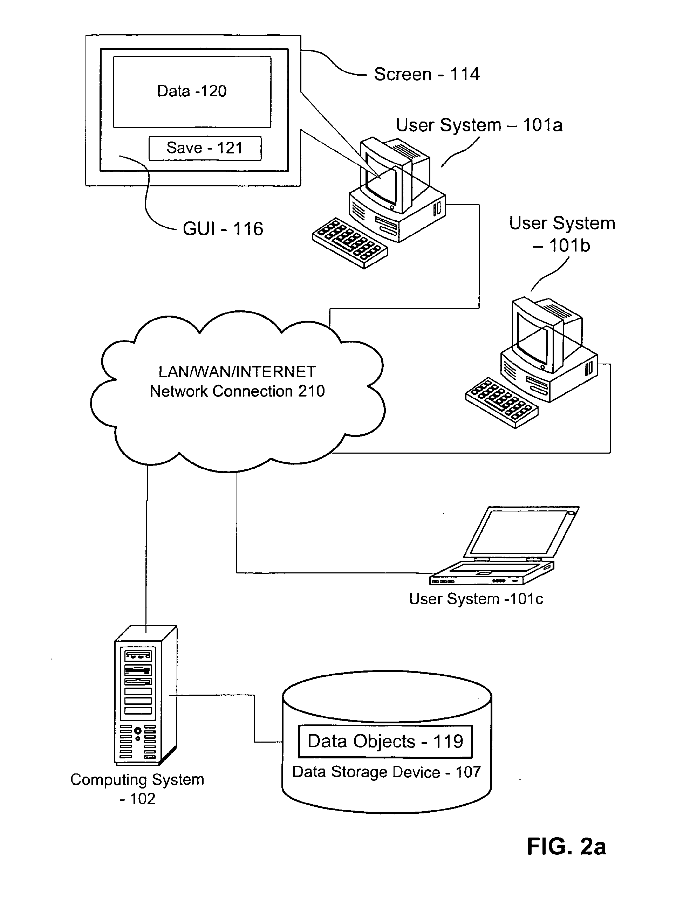

Referring now to Fig. 2a, a further embodiment of the invention is illustrated by way of a block diagram of an exemplary computer network. The network in Fig. 2a contains two or more user systems, user systems 101a to 101c, with 101c being a laptop. The user systems are interconnected by a network connection 210, which may be a LAN, a WAN or the Internet or a combination thereof. User systems 101a, 101b and 101c include a browser and may be used by different users, including different users in a company, for inputting data. As an example, a GUI 216 having a data fields 220 and a save button 221 is shown for user system 101a. Computer 201c is implemented as a server and includes all of the elements shown in Figure 1, and is also connected to data storage 107 containing data objects 119.

In Fig. 2a, various users at user systems 101a, b, and c, are connected to the computing system 102, which is capable of providing on demand access to business application software. Fig 2a applies as well to a situation, in which three different users (101a,b,c) are logged on to a server 102, which provides an on demand business application software.

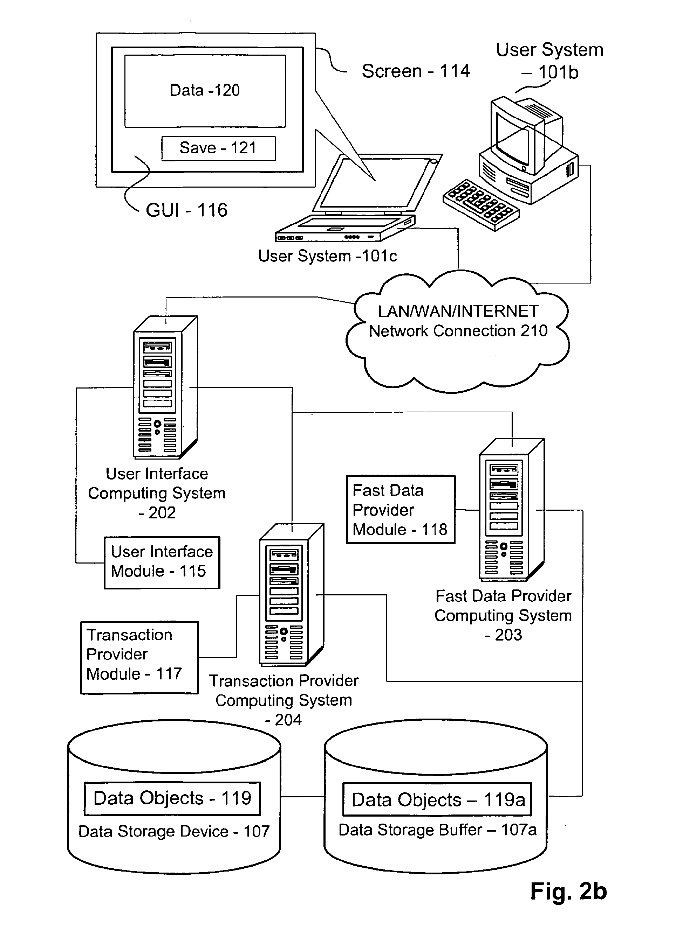

Fig. 2b shows a further embodiment of the invention illustrated by way of a block diagram of an exemplary computer network. In this embodiment, the network comprises two or more user systems, such as 101b and 101c, 101c being a laptop, interconnected by a network connection 210, which may be a LAN, a WAN or the Internet or a combination thereof. User systems 101b and 101c may include an application, such as browser 123, and may be used by different users for inputting data. As an example, GUI 116 having data field 120 and save button 121 is shown on screen 114 for laptop 101c. The network may also comprises a plurality of server computer systems 202, 203, and 204. In this embodiment, user interface module 115, fast data provider module 118 and transaction provider module 117 run on computing systems 202, 203, and 204, respectively. The fast data provider computing system 203 may also connect to a data storage buffer 207a for data storage device 207. Data object copies 119a of data objects 119 may be stored in buffer 207a. Buffer 207a may be held in volatile memory, for fast data access. Buffer 207a may be implemented as a database held in the main memory.

In a further embodiment, transaction provider module 117 and fast data provider module 118 may run on the same computing system. In a further preferred embodiment, a plurality of transaction provider modules 117 and fast data provider modules 118 may run on a plurality of servers, depending on the workload.

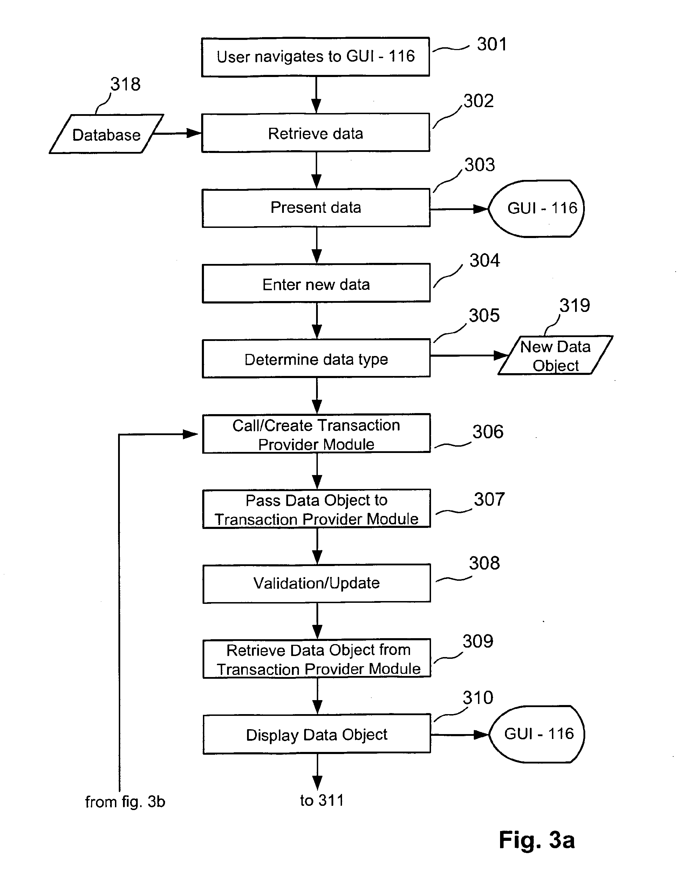

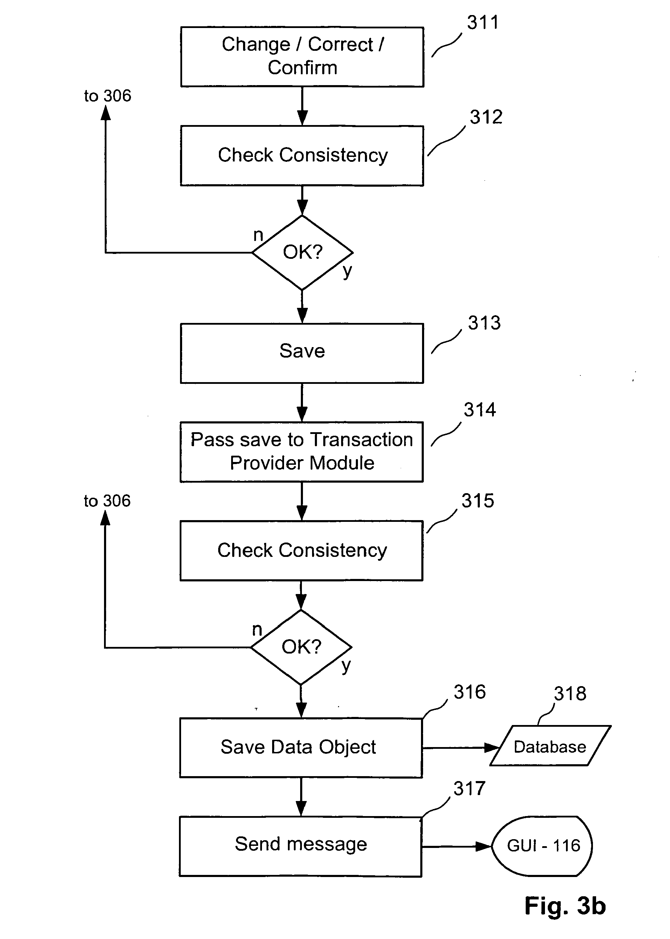

Referring now to Figs. 3a and 3b, a further embodiment of the invention is illustrated by way of a flow diagram of an embodiment of the invention in the form of a process. Using a computer system according to the architectures of Figs. 1 and/or 2, a typical user session in a data creation case and the corresponding component behavior may be as follows:

In a step 301 a user may navigate to a graphical user interface, GUI 116, provided by a browser 123, which may be based on a document created by user interface module 115 on a computing system 102, 202, 203, or 204, or user system 101. The navigation in step 301 broadly refers to a "global" navigation that starts a new session context with an own UI and TP. Within that session context, "local" navigation may be possible, for example to a subscreen on a tab or to the details of a table line. Local navigation stays in the same session context and works with the same UI and TP.

On request by user interface module 115, fast data provider module 118 may statelessly retrieve in step 302 all relevant data to initially fill the screen from a database 318, comprising, for example, a repository. Relevant data may comprise one or more -fields of a data object including the respective metadata, the descriptors of the fields and context information. Context information may comprise textual or business information about the data object and also business or textual information about other data objects that may be read from data storage 107 or data storage buffer 107a. Other data objects may be of the same type of the respective data object (e.g. in case of a list type display) or of a different type.

In step 303, the relevant data may be presented to the user via GUI 116. When a new data object is created, a data object of a specific type may be shown with empty fields.

In step 304, the user may enter new data in data field 120.

In step 305, user interface module 115 may determine the appropriate DataType and may create a corresponding data object 119 including information about the object, for example a data object of DataType A and DataID X and including respective data values. This is denoted A/X in short for the further explanation. The DataId may alternatively also be determined after step 305 by the transaction provider module 117.

In step 306, user interface module 115 may call or create a transaction provider module 117, including a transactional buffer for intermediate storage of data objects.

The new data object A/X and the data content may be passed to the transaction provider module 117 for validation and processing in step 307.

The transaction provider module 117 may store A/X in its transactional buffer and may perform validation/processing in step 308. This may change the data content of A/X.

In step 309, user interface module 115 may retrieve A/X from transaction provider module 117. User interface module may also retrieve error messages in case of errors.

In step 310, the user interface module 115 may display the updated content of A/X and the error messages, if applicable, via GUI 116.

In step 311, the user may change or correct or confirm A/X.

A further consistency check may be added in step 312 to reveal inconsistencies. When this further check is added, changes may be passed via user interface module 115 to transaction provider module 117 and processed as described in steps 306 to 310.

When the user is satisfied with the data content and any inconsistencies have been resolved, the data may be saved in step 313. To save the data, user interface module 115 may pass the save request to the transaction provider module 117 in step 314 to persistently store the data.

In step 315 transaction provider module 117 may ensure data consistency and may reject the save request; this leads back to step 306. In some embodiments, this additional data consistency check may reduce the risk of storing inconsistent data because data objects relating to saved data might have been changed by other processes.

If the data A/X are consistent, transaction provider module 117 may transactionally saves A/X to the database 318 on data storage 107 in step 316.

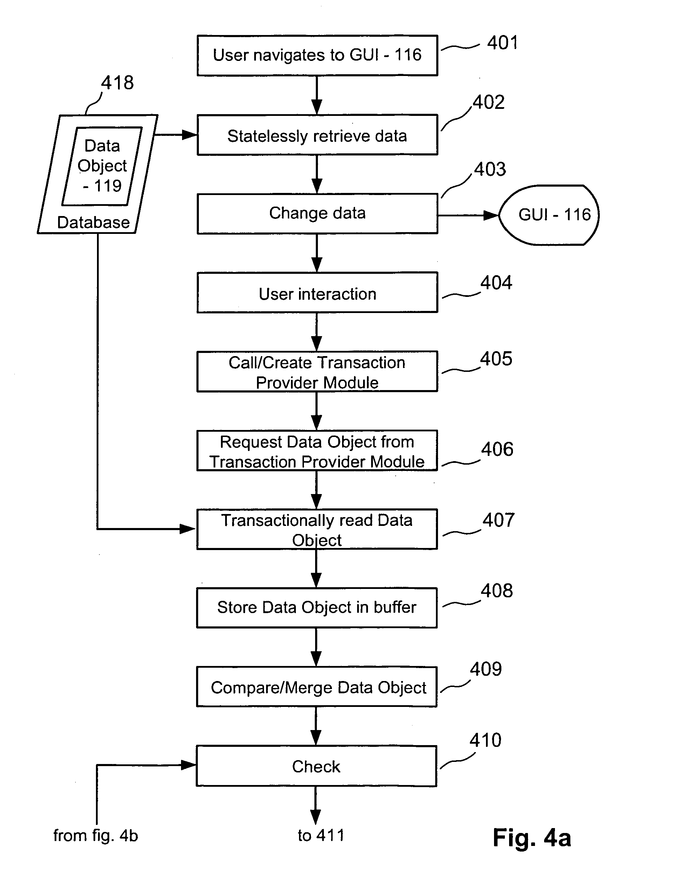

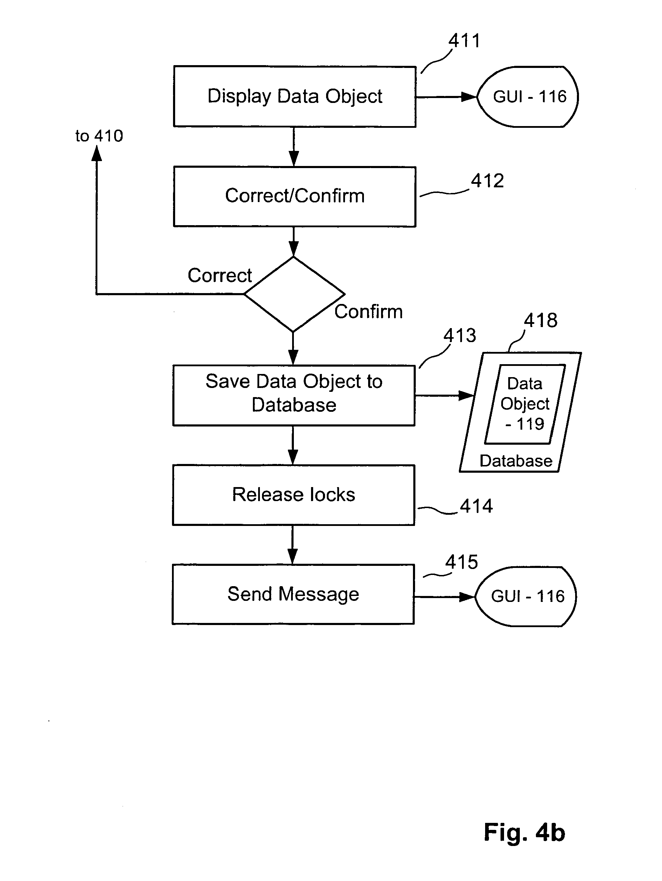

In step 317, a success message may be passed to the user via user interface module 115 and GUI 116. Referring now to Fig. 4, a further embodiment of the invention is illustrated by way of a flow diagram of an embodiment of the invention. Fig. 4 shows a sequence of user interaction in a data change case and the corresponding component behavior:

In a step, 401, a user may navigate to a GUI 116 provided by user interface module 115 via a created document 124 as previously described.

In step 402, the user interface module 115 may retrieve all or part of the relevant data of a data object 119 statelessly via fast data provider module 118 and may initially fill the GUI 116 including data fields 120 with all or part of the data from data object 119. The retrieved data may also be buffered as described in Fig. 2b, including buffer 207a with buffered data object copies 119a. Retrieving the data may include determining the appropriate DataType and corresponding DataID of data object 119, such as DataType A and DataID X.

In step 403, the user may change data object 119 in data field 120.

In step 404, the user may interact with GUI 116 thereby indicating that a changed data object should be saved, such as by clicking on a save button or other appropriate action.

Triggered by the user interaction in step 404, user interface module 115 may compare the data from the GUI 116 with the data from the fast data provider module 118. If the data has been changed, a transaction provider module 117, including a transactional buffer, may be called or created in step 405. A transaction provider module 117 may be created by creating main memory representations for transaction provider module 117 through software.

In step 406, user interface module 115 may request transaction provider module 117 to read the data object 119 from database 418.

After having successfully set a lock on the requested data object 119, transaction provider module 117 may transactionally read the data object 119 from database 418 in data storage 107 during step 407. If the data object 119 is already locked by another process, no lock can be acquired for that data object 119. In that case, an appropriate message may be passed to the user via GUI 116. The user may then choose to cancel, which may cause the data changes to be discarded, the GUI 116 to be closed, and/or user interface module 115 and transaction provider module 117 to be terminated. Alternatively the user may wait and resend the changed data when the lock is released.

In step 408, transaction provider module 117 may store the content of the data object 119 in its transactional buffer.

In step 409, user interface module 115 may compare the content of the data object 119 from transaction provider module 117 with the content originally provided by the fast data provider module 118. If there is a deviation, user interface module 115 may merge the content from transaction provider module 117 with the user changes on the screen data fields 120 in step 404.

In step 410, user interface module 115 may pass the changed data content of the data object 119 for validation and/or processing to transaction provider module 117. Transaction provider module 117 may store the updated data object 119 in its transactional buffer and may perform some validation and/or processing operations. This may cause additional changes of the data content of the data object 119.

In step 411, the merged and updated data content may be shown to the user together with a message asking the user for confirmation. In case of deviations mentioned above, a message text, e.g. "Data A was changed recently in another transaction. Please check your updates," may be shown.

In step 412, the user may change or correct or confirm the data. the process may go back to step 410.

If no error has occurred, the amended data object 119 may be stored in the database 418 in step 413.

After a successful save the acquired lock may be released in step 414.

In step 415, a success message may be passed to the user via the GUI 116.

The description of user interaction in the previous sections does not necessarily completely cover the end or all details of a user interaction. Further types of actions closing the process may be possible, e.g.:
Cancellation: All data changes that were not saved are discarded. The user interface module 115 and transaction provider module 117 corresponding to the screen are terminated. The session context is terminated. The screen is closed.
Save and Close: After a successful save no data changes are possible any more. The session context, user interface module 115 and transaction provider module 117 are terminated. The screen displays a confirmation of the successful save. The user closes the screen.
Save and Continue: After a successful Save, the user may continue to work on the same screen. The session context is partly kept. The user interface module 115 updates its store of "old" data content with the result of the Save operation by requesting the actual content from the transaction provider module 117. Afterwards the transaction provider module 117 is terminated. The user can continue to work on the screen.

An advantage of disclosed architecture lies in the decoupling of its components that allows optimization of each component to its own primary target without impairing other targets that are cared for by other components.

Fast data provider module and transaction provider module focus on fast data provision and user support independent of transactional integrity considerations. To achieve that, a great variety of techniques can be applied, ranging from main memory caches to load distribution across a big number of relatively independent machines.

Furthermore, overall performance and user experience may be improved through the invention by enabling: fast start of user interface screens with rich data content; automatic switch to transactional behavior in case of data changes; no explicit switch from display to edit mode by the user; session state is kept only in the user interface module and transaction provider module; only the absolute necessary state may be kept transactionally in the transaction provider module; per-user quantity of buffered data is greatly reduced to user interface module and transaction provider module; fast data provider module buffers may be used system-wide.

The invention may be implemented in a context with some type of "optimistic locking" mechanism that works with a minimal number of actual locks.

In Figures 5 to 8, features with reference signs having the last two ciphers in common, correspond to each other.

Referring now to FIG. 5, an exemplary computer system is illustrated that comprises a user system 1101 attached to a screen 1114, keyboard 1103, and mouse 1104; a computing system 1102; and, data storage 1107. Those skilled in the art will appreciate that methods, systems and computer programs consistent with the present invention apply equally to any computer system, regardless of whether the computer system is a complicated multi-user computing apparatus or a single user device such as a personal computer or workstation. In the embodiment of FIG. 5, computing system 1102 comprises a processor 1105, a memory 1108, a memory controller 1106, and an input/output interface 1112, all of which are interconnected via a system bus. Note that various modifications, additions, or deletions may be made to computer system 1102 and user system 1101 illustrated in FIG. 5 such as the addition of cache memory or other peripheral devices. Hence, FIG. 5 is presented to simply illustrate some of the salient features of the depicted system.

Processor 1105 may perform computation and control functions of computing system 1102, and comprises a suitable central processing unit (CPU). Processor 1105 may comprise a single integrated circuit, such as a microprocessor, or may comprise any suitable number of integrated circuit devices and/or circuit boards working in cooperation to accomplish the functions of a processor. Processor 1105 may execute computer programs, such as object-oriented computer programs, within memory 1108.

Input/output interface 1112 may contain an auxiliary storage interface allowing computer system 1102 to store and retrieve information from auxiliary storage devices, such as a magnetic disk (e.g., hard disks or floppy diskettes) or optical storage devices (e.g., CD-ROM). One suitable storage device is a direct access storage device (DASD) 1107. As shown in FIG. 5, data storage device 1107 may comprise a hard disk drive which may read programs and data from a hard disk.

Memory controller 1106, through use of a processor may be responsible for moving requested information from memory 1108 and/or through input/output interface 1112 to processor 1105. While for the purposes of explanation, memory controller 1106 is shown as a separate entity, in practice, portions of the function provided by memory controller 1106 may actually reside in the circuitry associated with processor 1105, memory 1108, and/or input/output interface 1112.

A terminal interface may be included as part of input/output interface 1112 to allow system administrators, computer programmers or other end users to communicate with computing system 1102, through, for example, screen 1114, keyboard 1103, mouse 1104, and the like or through programmable workstations.

Input/output interface 1112 may allow computer system 1102 via processor 1105 to communicate with a network for sending and/or receiving data, e.g. for a network connection with one or more further computer systems 1111, or for sending or receiving of data to or from other computers. In one embodiment, a plurality of computing systems like computing system 1102 can be connected to the same network via each system's input/output interface 1112. In such a case, the networked computers can be used as further input/output means, including being used as further storage locations.

In an embodiment, memory 1108 includes an operating system and an application, such as an enterprise resource planning application, which application includes a user interface provider module 1115 for generating a document, such as a HTTP web page, which represents a graphical user interface 1125. The document may be presented to a user as a graphical user interface (GUI) 1125 by means of a browser 1123. In other words, user interface provider module 1115 may communicate with browser 1123 using conventional techniques. GUI 1125 may comprise one or more data fields 1124 for displaying and/or editing data and a save button 1121, which may be activated e.g. via mouse arrow 1122.

Memory 1108 may further include a user transaction provider module 1116, a fast data provider module 1117 and a business transaction provider module 1118. Fast data provider module 1117 may access data objects 1119, user transaction provider module 1116 may access user transaction documents 1120, and business transaction provider module 1118 may access both data objects 1119 and user transaction documents 1120, as indicated by the broken arrows. Data objects 1119 and user transaction documents 1120 may be stored on a direct access data storage device 1107, which may include a commercially available database system. User interface provider module 1115 may be configured to exchange messages and data with user transaction provider module 1116 and fast data provider module 1117. User transaction provider module 1116 may be configured to exchange messages and data with user interface provider module 1115, fast data provider module 1117 and business transaction provider module 1118, as indicated by the solid lines between the modules.

It should be understood that memory 1108 comprises "memory" in its broadest sense, and can include, for example, Dynamic Random Access Memory (DRAM), Static RAM (SRAM), flash memory, cache memory, and other types of known memory. While not explicitly shown in FIG. 5, memory 1108 may be a single type of memory component or may be composed of different types of memory components. For example, memory 1108 and processor 1105 may be distributed across several different computing systems that collectively comprise the system shown in FIG. 5. Further, it should also be understood that programs in memory 1108 can include any and all forms of computer programs, including source code, intermediate code, machine code, and any other representation of a computer program. In different embodiments, data objects 1119 and/or user transaction documents 1120 may also be stored or buffered in a memory like memory 1108.

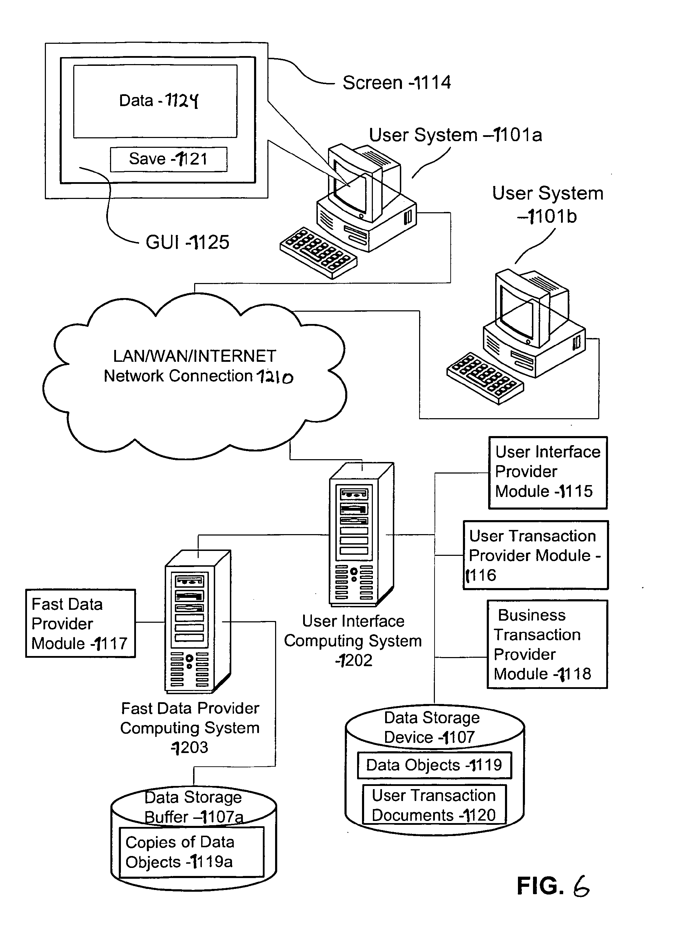

Referring now to FIG. 6, a further embodiment of the invention is illustrated by way of a block diagram of an exemplary computer network. In the embodiment shown in this figure, the network comprises two or more user systems, user systems 1101a and 1101b, interconnected by a network connection 1210, which may be a LAN, a WAN, the Internet, or a combination thereof. User systems 1101a and 1101b may include an application, such as browser 1123, and may be used by different users for inputting data. Fast data provider computing system 1203 may be implemented as a server and may include fast data provider module 1117 and buffer 1107a in which copies 1119a of data objects 1119 are stored and updated from data storage device 1107 as may be appropriate. User interface computing system 1202 may be implemented as a server and may include user interface provider module 1115, user transaction provider module 1116, business transaction provider module 1118 and direct access data storage device 1107 on which user transaction documents 1120 and data objects 1119 are stored, which may be in a relational database system.

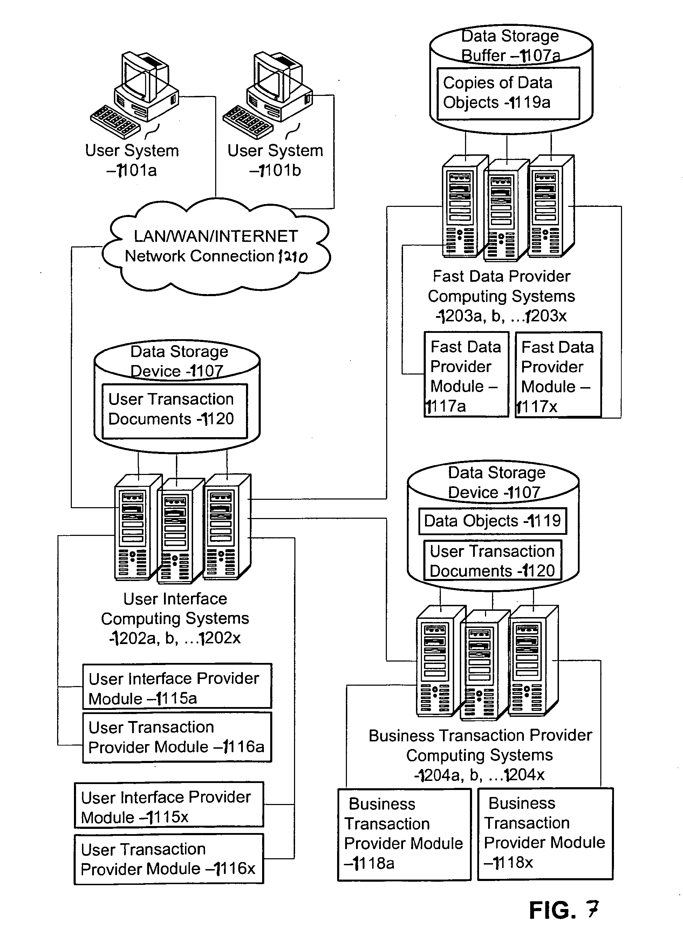

Fig. 7 shows a further preferred computer network according to the principles of the invention. In this figure, a plurality of fast data provider modules 1117a to 1117x may be implemented on a plurality of fast data provider computing systems 1203a to 1203x, which may be connected to copies of data objects 1119a through data storage buffer 1107a. A plurality of user interface provider modules 1115a to 1115x and user transaction provider modules 1116a to 1116x may be implemented respectively on a plurality of user interface computing systems 1202a to 1202x, which may be connected to user transaction documents 1120 on storage device 1107. In other embodiments not shown, user interface provider modules 1115a to 1115x may be implemented on separate computing systems from user transaction provider modules 1116a to 1116x. A plurality of business transaction provider modules 1118a to 1118x may be implemented on a plurality of business transaction provider computing systems 1204a to 1204x, which may be connected to data objects 1119 and user transaction documents 1120 through data storage device 1107. The user interface computing systems 1202a to 1202x may communicate with the fast data provider computing systems 1203a to 1203x and the business transaction provider computing systems 1204a to 1204x.

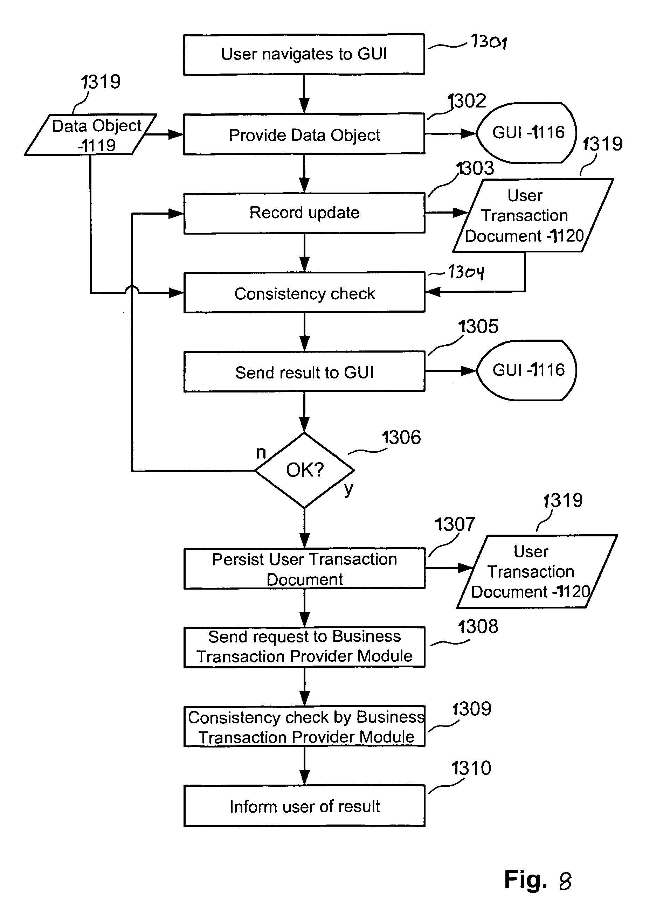

Referring now to Fig. 8, a further embodiment of the invention is illustrated by way of a flow diagram. In a step 1301, a user may navigate to a graphical user interface (GUI) 1125 provided by the user interface provider module 1115 on user systems 1101, 1101a, or 1101b.

In step 1302, fast data provider module 1117 may retrieve data object 1119 from a database on storage device 1107 when requested by user interface provider module 1115. The fast data provider module 1117 may provide the data object 1119 to user interface provider module 1115, which then may display the data object 1119 on the screen 1114 through the GUI 1125. The data object 1119 may also be buffered by fast data provider module 1117. The user interface provider module 1115 may enable data relating to data object 1119 to be entered or updated through GUI 1125.

In step 1303, data relating to data object 1119 that is entered, changed, deleted or otherwise updated may be recorded in a user transaction document 1120 that is administered by user transaction provider module 1116.

In step 1304, user transaction provider module 1116 may perform a consistency check between the original data object 1119 and the updated data object 1119 by comparing buffered data object 1119 from fast data provider module 1117 to the user transaction document 1120.

In step 1305, user transaction provider module 1116 may send the result back to user interface provider module 1115, which then notifies the user through GUI 1125. The user then may decide to make changes to the data if the check gives the result "not OK" in step 1306 by returning to step 1303.

If the consistency check is OK, the user may request to save the update in step 1307 and the user transaction provider module 1116 may persist the user transaction document 1120 in storage device 1107.

In step 1308, user transaction provider module 1116 may send a processing request for user transaction document 1120 to the business transaction provider module 1118. Such processing request may be sent synchronous or asynchronous at predefinable intervals. Alternatively, business transaction provider module 1118 may check at predefinable intervals whether a new or updated user transaction document 1120 exists. When a new or updated user transaction document 1120 exists, the business transaction provider module 1118 may then process the new or updated user transaction document 1120.

In step 1309, business transaction provider module 1118 may perform a further consistency check, if needed or desired, between user transaction document 1120 and data object 1119. If no errors occur, business transaction provider module 1118 may transactionally update data object 1119 in data storage device 1107 and set the user transaction document 1120 to successfully processed.

In step 1310, user transaction provider module may check user transaction document 1120 to identify whether it has been successfully processed, and thereafter may inform user interface provider module 1115 accordingly. User interface provider module 1115 may then present a corresponding message to the user via GUI 1125. In a further step, buffer 1107a of fast data provider module 1117 may also be updated with the data in storage device 1107.

To enhance performance and the user experience, all data, with the exception of step 1309, may be read via fast data provider module 1117 and all updating operations may be persisted by creating or modifying user transaction document 1120. Furthermore, the complexity involved in step 1309 may be hidden from the user so that the user can continue with other work and does not have to wait until step 1309 is finished. Hiding the complexity of step 1309 from the user may enhance the user experience because this step may take time to complete; for example, due to complex processing logic involving updates to several affected data objects, such as with financial account postings, or due to computer network exchanges, as shown in Fig. 3.

In some embodiments, the business transaction provider module may run into errors when performing a consistency check during step 1309. To deal with temporary error situations a certain number of retries may be made. But in case of repeated failure, the business transaction provider module 1118 may set the user transaction document to rejected/in error. Such user transaction documents may be presented to the user by user interface provider module 1115 through GUI 1125. The user then may either confirm the error, thereby causing user transaction document 1120 to be cancelled or the user may create a follow-up user transaction document 1120 with adjusted updates to circumvent the error; in that case the original user transaction document 1120 is marked as cancelled as well.

In various embodiments, the fast data provider module 1117 and user transaction provider module 1116 may be configured to focus on fast data provisioning and user support independent of transactional integrity considerations. To achieve this, a great variety of techniques can be applied, ranging from main memory caches to load distribution across a plurality of relatively independent machines. Performance may also be improved when the fast data provider module, transaction provider module, and user interface module are decoupled to enable optimization of each module without impairing the functionality of the other modules.

In various embodiments, business transaction provider module 1118 may be configured to focus on business logic and transactional integrity without the need to support a diversity of user interface requirements, thereby keeping the implementation as lean as possible while efficiently and reliably performing the transactional steps.

Note that while embodiments of the present invention are described in the context of a fully functional computer system, those skilled in the art will appreciate that modules of the present invention are capable of being distributed as a computer program product in a variety of forms, and that embodiments of the present invention apply equally regardless of the particular type of signal bearing media to actually carry out the distribution. Further examples of signal bearing media include: recordable type media such as floppy disks and CD ROMs, and transmission type media such as digital and analog communication links, including wireless communication links.

Modifications and adaptations of the present invention will be apparent to those skilled in the art from consideration of the specification and practice of the embodiments and features disclosed herein. The foregoing description has been presented for purposes of illustration and description. It is not exhaustive and does not limit embodiments of the invention to the precise forms disclosed. Modifications and variations are possible in light of the above teachings or may be acquired from the practicing embodiments consistent with the invention. For example, some of the described embodiments may include a combination of software and hardware, but some systems and methods consistent with the present invention may be implemented in software or hardware alone. Additionally, although aspects of the present invention are described as being stored in memory, one skilled in the art will appreciate that these aspects can also be stored on other types of computer-readable media, such as secondary storage devices, for example, hard disks, floppy disks, or CD-ROM; the Internet or other propagation medium; or other forms of RAM or ROM.

While illustrative embodiments of the invention have been described herein, the present invention is not limited to the various preferred embodiments described herein, but includes any and all embodiments having equivalent elements, modifications, omissions, combinations (e.g., of aspects across various embodiments), adaptations and/or alterations as would be appreciated by those in the art based on the present disclosure. The limitations in the claims are to be interpreted broadly based on the language employed in the claims and not limited to examples described in the present specification or during the prosecution of the application, which examples are to be construed as non-exclusive. For example, in the present disclosure, the term "preferably" is non-exclusive and means "preferably, but not limited to." Further, means-plus-function or step-plus-function limitations will only be employed where for a specific claim limitation all of the following conditions are present in that limitation: a) "means for" or "step for" is expressly recited; b) a corresponding function is expressly recited; and c) structure, material or acts that support that structure are not recited.

Other embodiments of the invention will be apparent to those skilled in the art from consideration of the specification and practice of the invention disclosed herein. It is intended, therefore, that the specification and examples be considered as exemplary only, with a true scope and spirit of the invention being indicated by the following claims.

## Claims

1. A computer system for processing a data object comprising:
a storage device containing a database for storing a plurality of data objects;
a user interface module configured to create a document to be presented to a user via a graphical user interface on a screen;
a fast data provider module configured to statelessly read upon request from the user interface module the data object from the database by treating the request as an independent transaction and provide the data object to the user interface module;
a transaction provider module configured to read the data object from the user interface module, to transactionally read or store the data object from or in the database by preserving consistency and atomicity, and to perform a consistency check between the data object read from the user interface module and the database;
wherein the user interface module is further configured to:
read the data object from the fast data provider module or from the transaction provider module,
incorporate data of said data object into the document,
receive via the graphical user interface a user interaction indicating that data of a data object has been entered or amended, and,
on response of said indication,
send a request the transaction provider to transactionally read said data object from the database;
merge the entered or amended data with the read data object; and pass the data object including the entered or amended data to the
transaction provider module to transactionally store the entered or amended data in the database.

2. The computer system of claim 1, wherein the database is a relational database.

3. The computer system of claim 1 or 2, wherein the fast data provider module comprises at least one of a caching and a replication mechanism.

4. The computer system of any one of claims 1 to 3, wherein the user interaction comprises initiating a save function in the graphical user interface.

5. The computer system of any one of claims 1 to 4, wherein the user interaction comprises activating a data field via the graphical user interface.

6. The computer system of any one of claims 1 to 5, wherein the user interaction comprises moving a cursor in a data field in the graphical user interface.

7. The computer system of any one of claims 1 to 6, wherein the user interface module, the fast data provider module and the transaction provider module are distributed over a plurality of interconnected servers.

8. A computerized method for updating a data object in a database comprising:
receiving, via a graphical user interface and a user interface module, a request to display data from the data object;
sending, via the user interface module, a request for said data object to a fast data provider module;
statelessly reading, by means of the fast data provider module, the data object from the database by treating the request as an independent transaction;
sending the read data object to the user interface module;
displaying data from said data object via the graphical user interface;
receiving, via the graphical user interface, a user interaction indicating that data relating to the displayed data has been entered or amended; and,
responsive to said received user interaction:
requesting, via the user interface module, the transaction provider to transactionally read said data object from the database by preserving consistency and atomicity of said data object;
merging said data object with the entered or amended data;
transactionally updating, via the transaction provider module, the data object in the database by preserving consistency and atomicity.

9. The method of claim 8, further comprising:
performing a consistency check between the amended data object and the transactionally read data object and,
when the consistency checks reveal no error, updating the data object in the database on the basis of the amended data object.

10. The method of claim 8 or 9, wherein the user interaction comprises initiating a save functionality in the graphical user interface.

11. The method of any one of claims 8 to 10, wherein the user interaction comprises activating a data field via the graphical user interface.

12. The method of any one of claims 8 to 11, wherein the user interaction comprises moving a cursor in a data field in the graphical user interface.
